(19) Europäisches Patentamt
European Patent Office
Office européen des brevets

(11) EP 0 341 473 B1

(12) **EUROPÄISCHE PATENTSCHRIFT**

(45) Veröffentlichungstag und Bekanntmachung des Hinweises auf die Patenterteilung:
**06.10.1999 Patentblatt 1999/40**

(51) Int Cl.$^6$: **C08G 75/23**, C08L 81/06

(21) Anmeldenummer: **89107315.7**

(22) Anmeldetag: **22.04.1989**

(54) **Verfahren zur Sulfonierung von aromatischen Polyäthersulfonen**

Process for sulphonating aromatic polyether sulphones

Procédé pour la sulfonation de polyéthersulfones aromatiques

(84) Benannte Vertragsstaaten:
**AT BE CH DE ES FR GB GR IT LI LU NL SE**

(30) Priorität: **30.04.1988 DE 3814760**
**30.04.1988 DE 3814759**

(43) Veröffentlichungstag der Anmeldung:
**15.11.1989 Patentblatt 1989/46**

(73) Patentinhaber: **Akzo Nobel N.V.**
**6824 BM Arnhem (NL)**

(72) Erfinder:
- **Sluma, Heinz-Dieter, Dr.**
  **D-8754 Grossostheim (DE)**
- **Huff, Dieter**
  **D-8753 Obernburg (DE)**

(74) Vertreter: **Fett, Günter et al**
**Acordis AG**
**Kasinostrasse 19 - 21**
**42103 Wuppertal (DE)**

(56) Entgegenhaltungen:
**EP-A- 0 008 895** **EP-A- 0 045 194**
**EP-A- 0 112 724**

- **PATENT ABSTRACTS OF JAPAN vol. 11, no. 273 (C-445)(2720) 04 September 1987, & JP-A-62 74929 (NITTO ELECTRIC IND CO LTD) 06 April 1987,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 341 473 B1

Printed by Jouve, 75001 PARIS (FR)

## Beschreibung

Die Erfindung betrifft ein Verfahren zur Sulfonierung von aromatischen Polyäthersulfonen mittels einer Lösung von Schwefeltrioxid in konzentrierter Schwefelsäure und unter Verwendung eines Lösungsmittels für das entsprechende Polyäthersulfon.

Unter aromatischen Polyäthersulfonen werden hierbei Polymere verstanden, deren monomere, sich wiederholende Einheiten mindestens

a) eine Sulfongrupe zwischen zwei aromatischen Resten und

b) eine Ätherbindung zwischen zwei aromatischen Resten

aufweisen, wobei die beiden aromatischen Reste, zwischen denen sich die Sulfongruppe befindet, jeweils über eine Ätherbindung an einen weiteren aromatischen Rest gebunden sind. Die Verknüpfung der in der monomeren Einheit vorliegenden aromatischen Reste mit den entsprechenden Substituenten kann jeweils in o-, m-, oder p-Stellung erfolgen. Gegebenenfalls tragen die aromatischen Reste weitere Substituenten, wobei jedoch in jedem aromatischen Rest der Monomereinheit mindestens ein an den aromatischen Ring gebundenes Wasserstoffatom vorliegt, das mittels einer Sulfonierungsreaktion durch die Sulfonsäuregruppe substituiert werden kann.

Typische Vertreter von solchen Polyäthersulfonen sind Polymere, welche die folgende, sich wiederholende, Strukturheinheit aufweisen

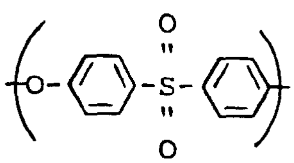

Solche Polymere sind handelsübliche Produkte.

Aromatische Polyäthersulfone (PÄS) sind bekannte Polymere, die bereits für verschiedene Einsatzgebiete verwendet wurden, wobei von der guten thermischen, mechanischen und chemischen Stabilität Gebrauch gemacht wird. Beispiele für Einsatzgebiete sind Autoteile, Schaltungen und die Verwendung für Beschichtungen.

polyäthersulfone wurden auch bereits für die Herstellung von Membranen verwendet, welche in Stofftrennungsprozessen eingesetzt werden. Hierbei macht man von der Stabilität des Materials z.B. gegen Wasser, Chlor und eine Reihe organischer Lösungsmittel Gebrauch. Membranen aus Polyäthersulfonen sind beispielsweise in der EP-A- 0 121 911 beschrieben.

Membranen aus solchen Materialien weisen jedoch für eine Reihe von Einsatzzwecken, bei denen hohe Hydrophilie gefordert wird, eine nicht genügende Hydrophilie auf, was sich beispielsweise in einer zu langsamen Benetzung durch flüssige wäßrige Systeme äußert.

Es wurde daher versucht, Polyäthersulfone durch Einführung ionischer bzw. dissoziierbarer Substituenten zu modifizieren. Eine der hierfür angewandten Möglichkeiten besteht in der Einführung von Sulfonsäuregruppen, die anschließend zu Salzen umgesetzt werden können. Die Substituierung der aromatischen Polyäthersulfone erfolgt am aromatischen Ringsystem und wird vielfach mit einem Sulfonierungsmittel durchgeführt. Als Sulfonierungsmittel kann hierbei Chlorsulfonsäure verwendet werden. Ein entsprechendes Verfahren ist beispielsweise in der US-PS 4 508 852 beschrieben. Ein Nachteil bei der Verwendung von Chlorsulfonsäure besteht darin, daß Nebenreaktionen auftreten. So werden bei dem Verfahren der genannten US-PS nicht nur sulfonierte, sondern auch chlorsulfonierte Produkte erhalten. Daneben führt die dort beschriebene Umsetzung in organischen Lösungsmitteln bei Temperaturen von mehr als 40 °C teilweise zu unerwünschten vernetzten Polymeren.

Versuche, Polyäthersulfone mit konzentrierter Schwefelsäure zu sulfonieren, führten zu dem Ergebnis, daß dieses Verfahren nur für bestimmte Polymere durchführbar ist, deren Monomereinheiten in geeigneter Weise substituiert sind. So ist der EP-A- 0 008 894 zu entnehmen, daß zwar Phenylenreste, welche in 1.4-Stellung jeweils eine Ätherbindung aufweisen, durch konzentrierte Schwefelsäure sulfonierbar sind, nicht jedoch Phenylenreste, welche eine Sulfongruppe und eine Ätherbindung in p-Stellung zueinander aufweisen. Der Grund hierfür dürfte in der stark elektronenziehenden Wirkung der Sulfongruppe liegen. Die EP-A- 0 008 894 gibt zwar an, daß Chlorsulfonsäure oder Oleum auf diese genannten reaktionsträgen Phenylengruppen einwirken, rät jedoch von der Verwendung dieser Sulfonierungsmittel ab, da hierbei nur hohe Sulfonierungsgrade und/oder Polymerabbau zu erreichen seien. Eine kontrollierbare Sulfonierungsreaktion mit Chlorsulfonsäure oder Oleum sei nicht möglich. Die gleiche Aussage ist der EP-A-0 112 724 zu entnehmen.

Nach den Aussagen der US-PS 3 709 841 gelingt die Sulfonierung von Polyäthersulfonen auch mittels Chlorsulfonsäure oder Oleum, wenn in einem inerten Lösungsmittel gearbeitet wird. Als geeignete Lösungsmittel werden chlorierte Kohlenwasserstoffe genannt. Der Nachteil der Verwendung dieser Lösungsmittel liegt unter anderem in deren Toxizität begründet. Auch die Entsorgung gebrauchter Lösungsmittel wirft Probleme auf. Wünschenswert wäre demnach gegenüber den bekannten geschilderten Verfahren die Sulfonierung unter Verwendung von konzentrierter Schwefelsäure, welche Schwefeltrioxid enthält (Oleum, rauchende Schwefelsäure), als Lösungsmittel.

Aufgabe der vorliegenden Erfindung war es, ein Verfahren zur Sulfonierung von Polyäthersulfonen

zu entwickeln, welches ohne Verwendung organischer Lösungsmittel eine kontrollierbare Sulfonierung u.a. auch von reaktionsträgen aromatischen Resten in den Polymeren mittels Schwefeltrioxid in konzentrierter Schwefelsäure ermöglicht und zu sulfonierten Polymeren ohne die Entstehung größerer Mengen an Neben- oder Abbauprodukten führt, speziell auch in dem Fall, daß lineare Polyäthersulfone eingesetzt werden, die auf Basis folgender monomerer Einheiten aufgebaut sind,

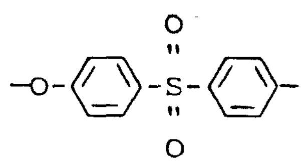

Die Lösung der Aufgabe besteht in einem Verfahren gemäß Oberbegriff von Anspruch 1, das dadurch gekennzeichnet ist, daß als Lösungsmittel konzentrierte Schwefelsäure verwendet wird, daß der Gehalt an Schwefeltrioxid, bezogen auf die Gesamtmenge der im Reaktionsgemisch vorliegenden reinen Schwefelsäure, während der gesamten Dauer der Sulfonierung auf einem Wert von weniger als 6 Gewichtsprozent gehalten wird und daß während der gesamten Reaktionsdauer die Temperatur der Reaktionsmischung niedriger als +30 °C gehalten wird.

Es wurde überraschenderweise gefunden, daß bei Einhaltung dieser Maßnahmen eine kontrollierbare Sulfonierung von aromatischen Polyäthersulfonen möglich ist und Polymerabbau weitgehend oder völlig vermieden werden kann. Der Sulfonierungsgrad, d.h. der Quotient aus der Gesamtzahl der Sulfonsäuregruppen im Polymeren und der Gesamtzahl der sich wiederholenden Monomereinheiten, läßt sich in bequemer Weise durch gezielte Einstellung der Polymerkonzentration, der Konzentration an Schwefeltrioxid und der Reaktionsdauer steuern. Ein sehr einfacher Weg hierzu besteht in der Wahl der geeigneten Reaktionsdauer, denn die Reaktion kann durch Zugabe von Wasser zum Reaktionsgemisch oder Eingießen des Reaktionsgemischs in Wasser jederzeit beendet werden.

Das erfindungsgemäße Verfahren ist zur Sulfonierung von Polyäthersulfonen geeignet, welche aromatische Reste enthalten und der eingangs genannten Definition entsprechen. Unter aromatischen Polyäthersulfonen werden im Rahmen der vorliegenden Erfindung aber auch Copolymere verstanden, in denen - neben anderen Monomereinheiten - die eingangs genannten Monomereinheiten vorliegen. Die Substitution von Wasserstoffatomen durch Sulfonsäurereste findet an den aromatischen Resten der Polyäthersulfongruppierungen und ggf. auch an aromatischen Resten anderer Monomereinheiten statt.

Es ist wesentlicher Bestandteil des erfindungsgemäßen Verfahrens, daß dafür Sorge getragen wird, daß während der gesamten Dauer der Sulfonierung der Gehalt an Schwefeltrioxid einen niedrigeren Wert als 6 Gew.% besitzt, wobei dieser Wert auf die Gesamtmenge der im Reaktionsgemisch vorliegenden reinen Schwefelsäure bezogen ist.

Der Gehalt an Schwefeltrioxid kann über die eingesetzten Mengen an Schwefelsäure und Schwefeltrioxid eingestellt werden, wobei jedoch ein etwaiger Wassergehalt der verwendeten Schwefelsäure zu berücksichtigen ist, d.h. der Gehalt an Schwefeltrioxid wird auf 100%ige wasserfreie Schwefelsäure bezogen. Falls das Schwefeltrioxid in gelöster Form (Oleum, rauchende Schwefelsäure) mit konzentrierter Schwefelsäure vermischt und das Oleum somit hierdurch verdünnt wird, bezieht sich der Gehalt an Schwefeltrioxid, welcher einzuhalten ist, natürlich auf die Summe der Menge an 100%-Schwefelsäure, welche aus dem Oleum stammt und der zur Verdünnung des Oleums verwendeten.

Es ist möglich, daß die eingesetzte konzentrierte Schwefelsäure, welche noch nicht mit Oleum versetzt wurde und/oder das eingesetzte Polyäthersulfon Wasser enthält. In diesem Fall reagiert das, z.B. in Form von Oleum zugesetzte, Schwefeltrioxid zuerst mit Wasser, bevor das Polymer substituiert wird. Es kann also in diesem Fall mehr Oleum eingesetzt werden, d.h. der Anfangsgehalt an Schwefeltrioxid kann höher sein, als sich aus der Grenze von 6 % rechnerisch ergibt. Erst wenn das Wasser mit Schwefeltrioxid zu Schwefelsäure umgesetzt ist, beginnt die Sulfonierungsreaktion, während welcher die angegebene Grenze von 6 Gew.% nicht erreicht werden darf.

Zweckmäßigerweise arbeitet man sogar deutlich unterhalb dieser Grenze, nämlich bei weniger als 3 Gew.% ggf. sogar bei nicht mehr als 1 bis 1,5 Gew.% Schwefeltrioxid während der gesamten Reaktionsdauer.

Der Gehalt an Schwefeltrioxid in der Schwefelsäure muß nicht unbedingt im Bereich einiger Gewichtsprozente liegen. Je nach Art des eingesetzten Polymeren, der Reaktionsdauer und/oder -temperatur kann die Sulfonierung bis zu dem gewünschten Ausmaß auch mit minimalen Mengen Schwefeltrioxid gelingen.

Die Einhaltung der Grenze für den Gehalt an Schwefeltrioxid kann z.B. dadurch erfolgen, daß man vor der Reaktion konzentrierte $SO_3$-freie Schwefelsäure mit der errechneten Menge Oleum versetzt, die Mischung kühlt und dann das Polymer in fester Form oder gelöst in konzentrierter Schwefelsäure zugibt. Dies ist eine bevorzugte Ausführungsform des erfindungsgemäßen Verfahrens. Eine andere besteht darin, daß man zuerst das Polymer in konzentrierter Schwefelsäure löst und anschließend Oleum langsam zutropft. Auch hierbei kann der Gehalt an Schwefeltrioxid in der Reaktionsmischung während der Reaktion niedriger als 6 % gehalten werden. Eine andere jedoch weniger bevorzugte Möglichkeit, das erfindungsgemäße Verfahren durchzuführen, besteht darin, Schwefeltrioxid in reiner

fester oder gasförmiger Form einer Lösung des Polymeren in konzentrierter Schwefelsäure zuzusetzen. Diese Ausführungsform ist deshalb weniger bevorzugt, weil entweder örtliche hohe Konzentrationen an $SO_3$ (Zugabe in fester Form) oder örtliche Überhitzungen (Zugabe als Gas) auftreten können, welche einen Polymerabbau begünstigen.

Bei den beiden genannten bevorzugten Ausführungsformen, in denen Oleum verwendet wird, beträgt dessen Gehalt an Schwefeltrioxid vorzugsweise 65 Gew.%.

Eine weitere gut geeignete Möglichkeit, zu Schwefeltrioxid enthaltender Schwefelsäure zu gelangen, die als Reaktionsmedium eingesetzt wird, besteht außer in der Verwendung von Oleum darin, daß man konzentrierter Schwefelsäure eine Verbindung zusetzt, welche in konzentrierter Schwefelsäure zur Entstehung von Schwefeltrioxid führt.

Hierfür läßt sich bevorzugt Phosphorpentoxid verwenden, welches aus konzentrierter Schwefelsäure Schwefeltrioxid freisetzt. Geeignet sind auch Verbindungen des Typs $M^{n+}(S_2O_7)^{2-}{}_{n/2}$, wobei M ein Metall und n die Wertigkeit dieses Metalls ist.

Ein für das erfindungsgemäß Verfahren gut geeignetes Beispiel ist Kaliumdisulfat, $K_2S_2O_7$.

Geeignet sind ferner auch weitere Verbindungen, welche Schwefeltrioxid komplex oder kovalent gebunden enthalten und es unter den Sulfonierungsbedingungen freisetzen.

Die zuzusetzende Menge an einer oder mehreren der vorgenannten Verbindungen wird natürlich durch den maximalen Gehalt an Schwefeltrioxid begrenzt, der, wie oben beschrieben, während der Sulfonierungsreaktion vorliegen darf, nämlich weniger als 6 Gew%.

Die Schwefeltrioxid liefernde de Verbindung kann ebenfalls, wie oben für den Fall von Oleum beschrieben, der Schwefelsäure vor oder nach Zugabe des Polymeren zugesetzt werden.

Die Verwendung von Phosphorpentoxid bietet darüber hinaus in einigen Fällen den Vorteil, daß die Sulfonierung bei tieferen Temperaturen durchgeführt werden kann als bei Verwendung von Oleum, d.h. bei Temperaturen, bei denen Oleum bereits erstarrt.

Der Vorteil bei Verwendung von $K_2S_2O_7$ liegt darin, daß dieses Salz in Form eines leicht handhabbaren Pulvers eingesetzt werden kann, wodurch gezielte $SO_3$-Freisetzung möglich ist und örtliche Überkonzentration an Schwefeltrioxid vermieden werden kann.

Eine weitere für das erfindungsgemäße Verfahren wesentliche Maßnahme besteht in der Temperatursteuerung während der Sulfonierungsreaktion. Um Polymerabbau und Nebenreaktionen möglichst gering zu halten, muß die Temperatur der Reaktionsmischung während der gesamten Reaktionsdauer niedriger als 30 °C liegen. Dies erfolgt durch Kühlung. Es ist zweckmäßig, dafür Sorge zu tragen, daß auch keine kurzzeitigen örtlichen Überhitzungen auftreten. Wählt man die Ausführungsform, bei der Oleum zu einer Lösung des Polymeren in Schwefelsäure zugetropft wird, sollte dies daher langsam und unter Rühren der Reaktionsmischung erfolgen. Langsames Zutropfen bedeutet also, daß erst dann weiteres Oleum zugetropft wird, wenn die vorangegangene Menge durch Rühren im Gemisch verteilt wurde.

Zum Lösen des Polymers kann die Schwefelsäure vor Zugabe von Oleum allerdings auf eine etwas höhere Temperatur als +30 °C erwärmt werden, zweckmäßigerweise aber nicht auf mehr als 40 °C. Vor Oleumzugabe ist dann auf die Reaktionstemperatur zu kühlen.

Die untere Grenze für die Temperatur des Reaktionsgemisches während der Reaktion wird so gewählt, daß noch eine homogene Flüssigkeit, d.h. daß kein Bestandteil der Mischung im festen Aggregatzustand vorliegt. Zweckmäßig ist es im Normalfall, eine Temperatur von etwa 5 °C nicht zu unterschreiten. Die als Lösungsmittel eingesetzte konzentrierte $SO_3$-freie Schwefelsäure kann, wie erwähnt, Wasser enthalten. Der Wassergehalt darf jedoch nicht so hoch sein, daß das Polymer bei der Reaktionstemperatur nicht mehr in der Schwefelsäure löslich ist. Der Wassergehalt der Schwefelsäure sollte, damit das Polymer gelöst werden kann, 20 Gew.% nicht überschreiten. Im Normalfall ist ein Wassergehalt von 5 Gew.% oder weniger gut geeignet, einerseits deshalb, weil sich Polyäthersulfone in höher konzentrierter Schwefelsäure besser lösen, zweitens damit nicht zuviel Schwefeltrioxid für die Umsetzung mit Wasser verbraucht wird, die schneller abläuft als die Sulfonierung des Polymeren.

Es empfiehlt sich, um höhere Sulfonierungsgrade zu erreichen, die Reaktion nicht sofort abzubrechen, nachdem die Gesamtmenge der Reaktionspartner dem Lösungsmittel zugegeben ist, sondern die Reaktion noch einige Zeit, z.B. 1 bis 5 Stunden unter Rühren und Kühlen weiterlaufen zu lassen. Das Abbrechen der Reaktion geschieht zweckmäßigerweise durch Ausfällen des Polymers mittels Wasser. Dies kann erfolgen, indem man das Reaktionsgemisch langsam in kaltes Wasser gießt. Anschließend wird das Polymer isoliert, gewaschen und getrocknet. Hierbei ist allerdings zu beachten, daß kürzerkettige und/oder hochsulfonierte Polymereinheiten eine höhere bzw. vollständige Löslichkeit in Wasser besitzen. Diese lassen sich dann nicht mehr durch Wasser ausfällen. Zur Isolierung dieser Produkte müssen daher andere Wege beschritten werden. Im Normalfall wird jedoch auf diese wasserlöslichen Nebenprodukte kein Wert gelegt, da z.B. bei der Verwendung der sulfonierten Polyäthersulfone für die Membranherstellung chemische Beständigkeit d.h. Unlöslichkeit des (Membran-) Materials gegenüber Wasser erforderlich ist.

Der Sulfonierungsgrad des Polymeren nach der Reaktion ist der Quotient aus der Gesamtzahl der Sulfonsäuregruppen im Polymeren und der Gesamtzahl der sich wiederholenden Monomereinheiten. Ein Sulfonierungsgrad von 0,2 bedeutet demnach, daß im Durchschnitt an jeder fünften Monomereinheit eine Sulfonsäuregruppe vorliegt. Der Sulfonierungsgrad ist ausschlaggebend für die Hydrophilie bzw. die Ionenaustauschkapazität des sulfonierten Polymeren. Er läßt sich bequem durch Titration der Sulfonsäuregruppen einerseits und Bestimmung der Anzahl der Monomereinheiten andererseits ermitteln. Letztere Bestimmung kann rechnerisch erfolgen, indem man das nach üblichen Methoden bestimmte Molgewicht durch das berechnete Molgewicht der Monomereinheit dividiert.

Die erwähnte Ionenaustauschkapazität (IEC), welche ein Maß für die Hydrophilie darstellt, kann in meq/g angegeben werden. 1 meq/g bedeutet, daß pro Gramm Polymer 1 mmol Protonen gegen 1/n mmol eines n-wertigen Kations ausgetauscht werden können.

Die IEC läß sich wiederum durch Titration bestimmen.

Für manche Einsatzzwecke ist das sulfonierte Polymer in Form der freien Sulfonsäuregruppe(n) weniger geeignet als in Form von deren Salz(en), beispielsweise Metall- oder Ammoniumsalzen. Die Überführung in diese Salze kann durch Neutralisation mit den entsprechenden Basen in einem Lösungsmittel erfolgen.

Wie erwähnt, gibt es mehrere Möglichkeiten für die Durchführung des erfindungsgemäßen Verfahrens, darunter solche, bei denen Oleum verwendet wird. Von diesen sind zwei besonders bevorzugt. Die Wahl der einen oder der anderen Alternative hat Auswirkungen auf die Sulfonierungsgrade und Ausbeuten an sulfonierten Polyäthersulfonen.

Die eine der bevorzugten Ausführungsformen (Alternative I) besteht darin, zuerst das Polymer in $SO_3$-freier konzentrierter Schwefelsäure zu lösen, gegebenenfalls bei leicht erhöhter Temperatur, die Lösung zu kühlen und dann langsam Oleum unter Rühren zuzugeben, z. B. durch Zutropfen. Bei der zweiten Ausführungsform (Alternative II) wird zuerst Oleum zu konzentrierter Schwefelsäure gegeben, die Lösung gekühlt und dann das Polymer in fester Form oder gelöst in konzentrierter Schwefelsäure zugegeben. In beiden Fällen ist die Oleummenge so zu bemessen, daß nach der Umsetzung des Schwefeltrioxids mit Wasser, das in der Schwefelsäure und/oder im Polymer vorliegen kann, der Gehalt an Schwefeltrioxid, bezogen auf die Gesamtmenge an reiner Schwefelsäure, bei weniger als 6 Gew.% liegt. Vor Beginn der Lösungsherstellung muß also der Wassergehalt der konzentrierten Schwefelsäure und der des Polymeren bestimmt werden.

Alternative I führt im Normalfall zu einer geringeren Ausbeute an sulfoniertem Polymer, das durch Fällung mit Wasser gewonnen werden kann. Es wird angenommen, daß bei dieser Arbeitsweise ein größerer Anteil wasserlöslicher Verbindungen entsteht als im Fall von Alternative II. Die Ausbeuten an wasserunlöslichem Polymer liegen im Fall von Alternative I bei etwa 70 , bei Alternative II betragen sie normalerweise 95 - 100 %, bezogen jeweils auf die nach der eingesetzten Polymermenge zu erwartende theoretische Menge an sulfoniertem Produkt. Alternative II führt im Normalfall bei gleichen Ausgangsmengen zu höheren Sulfonierungsgraden als Alternative I.

Die Temperatur der Reaktionsmischung während der Dauer der Sulfonierungsreaktion liegt bei einer bevorzugten Ausführungsform niedriger als 12 °C. Dadurch wird die Gefahr örtlicher Überhitzungen und des Polymerabbaus noch weiter eingeschränkt.

Die maximale Konzentration des Polymeren in der Ausgangsmischung wird einerseits durch dessen Löslichkeiteigenschaften, andererseits durch die Verarbeitbarkeit limitiert. Bevorzugt verwendet man Polymerkonzentrationen im Bereich zwischen 5 und 30 Gew.%, bezogen auf die Gesamtmenge an reiner, wasserfreier Schwefelsäure.

Für das erfindungsgemäße Verfahren besonders geeignete Polyäthersulfone sind Polymere, welche aus folgenden, sich wiederholenden Struktureinheiten aufgebaut sind:

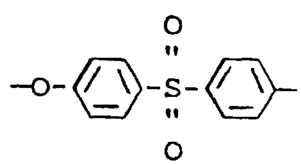

Das Molekulargewicht des eingesetzten Polyäthersulfons kann in weiten Grenzen variiert werden. Allerdings ist darauf zu achten, daß niedrigmolekulare Anteile an Endprodukt insbesondere bei höheren Sulfonierungsgraden, wasserlöslich und daher für manche Einsatzzwecke ungeeignet sind. Bevorzugt verwendet man Polymere für das erfindungsgemäße Verfahren, deren Gewichtsmittel des Molekulargewichts zwischen 30.000 und 60.000 Dalton liegt.

Die nach dem erfindungsgemäßen Verfahren erhaltenen sulfonierten Polyäthersulfone lassen sich vorteilhaft zur Herstellung von Membranen verwenden. Die so erhaltenen Membranen eignen sich wegen ihres hydrophilen Materials besonders für Einsatzgebiete, bei denen eine rasche Benetzung durch flüssige wäßrige Systeme erwünscht ist, z.B. in der Biotechnologie, Pharmazie, Lebensmitteltechnologie und Abwasserreinigung oder sonstigen Prozessen, bei denen aus wäßrigen flüssigen Systemen Stoffe abgetrennt werden.

Membranen aus diesen sulfonierten Polyäthersulfonen lassen sich nach allgemein bekannten Verfahren herstellen, z.B. durch Gießen eines Films aus einer Lösung des Polymeren, Verdampfen eines Teils des Lösungsmittels und Behandlung mit einem Fällungsmittel für das Polymere. Die Membranen können auch in Form von Hohlfäden (Kapillarmembranen) hergestellt werden, z.B. durch Extrudieren einer Lösung des Polymeren durch eine Hohlfadendüse in ein Koagulationsbad. Hierbei kann die Düse direkt in das Koagulationsbad eintauchen, es kann sich aber zwischen beiden auch ein sogenannter "Luftspalt" von beispielsweise einigen cm Länge befinden, so daß die geformte Lösung unterhalb der Düse zuerst durch eine kurze Strecke in Luft geführt wird, bevor sie in das Koagulationsbad eintaucht. Geeignete Lösungsmittel für die genannten Verfahren sind beispielsweise N,N-Dimethylacetamid, N-Methyl-pyrrolidon und Dimethylsulfoxid. Die Polymerlösung kann auch zur Erzielung spezieller Eigenschaften noch weitere Zusätze enthalten, z.B. viskositätserhöhende Additive wie Polyvinylpyrrolidon oder Polyäthylenglykol oder Nichtlösungsmittel für das sulfonierte Polyäthersulfon wie Äthylenglykol, N-Methyl-formamid, Glycerin oder Wasser. Als Flüssigkeit für die Füllung des Lumens bei der Hohlfadenextrusion können beispielsweise Paraffinöl oder ein Gemisch aus N,N-Dimethylacetamid, Glycerin und Wasser verwendet werden, als Koagulationsbad beispielsweise Wasser oder ein Gemisch aus Wasser und demjenigen Lösungsmittel, in dem das Polymer vor Extrusion gelöst wurde.

Vorzugsweise werden zur Membranherstellung sulfonierte Polyäthersulfone mit einem Sulfonierungsgrad zwischen 0,001 und 0,6 verwendet. Besonders günstig ist ein Sulfonierungsgrad von 0,01 bis 0,6.

Die Membranen sind für eine Reihe von Einsatzzwecken besonders geeignet, wenn sie in Hohlfaden- oder Schlauchform oder als Flachmembran vorliegen. Sie sind vorzugsweise als Membranen für den Mikrofiltrationsbereich, d.h. mit mittleren Porengrößen im Bereich von 0,05 bis 5 µm und einer Porosität zwischen 50 und 85 % ausgestaltet. Die Porosität ist hierbei der Quotient aus dem durch Membranporen eingenommenen Volumen und dem Gesamtvolumen der Membran. Sie läßt sich durch Messung des spezifischen Gewichts der Membran und der des spezifischen Gewichts des nichtporösen Membranmaterials ermitteln.

Die nach dem erfindungsgemäßen Verfahren erhaltenen Polymeren lassen sich vorteilhaft auch im Gemisch mit einem anderen Polymeren zu Membranen verarbeiten. Diese Arbeitsweise besitzt den Vorteil, daß aus dem gleichen sulfonierten Polyäthersulfon durch Mischen mit einem nach Art und Menge gezielt ausgewählten weiteren Polymeren Membranen erhalten werden, deren Hydrophilieeigenschaften gezielt abgestuft werden können. Durch Mischen mit einem weiteren weniger hydrophilen Polymeren, z.B. einem Polymeren, das keine ionischen oder dissoziierbaren Gruppen enthält, läßt sich eine Membran einer bestimmten Hydrophilie außerdem auch häufig kostengünstiger herstellen als durch alleinige Verwendung eines Polyäthersulfons mit niedrigerem Sulfonierungsgrad.

Gut geeignet für eine Reihe von Einsatzzwekken sind Membranen aus Gemischen, die einen Sulfonatgehalt zwischen 0,05 und 18 Gew.% aufweisen, vorzugsweise von 0,1 bis 18%.Dieser Sulfonatgehalt läßt sich durch Titration bestimmen. Er ist definiert als der gewichtsmäßige Anteil von $SO_3H$-Gruppen, bezogen auf das Gesamtgewicht der Polymermischung.

Die Erfindung wird durch nachstehende Ausführungsbeispiele veranschaulicht:

Beispiel 1 (Variante I)

200 g (0,86 mol Monomereinheiten) getrocknetes (im Hochvakuum bei Raumtemperatur bis zur Gewichtskonstanz) Polyäthersulfon (Victrex® 5200P der Fa. ICI) werden in 600 ml (ca. 1104 g) konzentrierter Schwefelsäure (ca. 97%ig; enthält 1,7 mol $H_2O$) gelöst. Unter ständiger Kühlung auf 10 °C und unter Rühren werden 125 ml 65%iges Oleum (2 mol $SO_3$) langsam zugetropft (1,5 Stunden). Nach beendeter Zugabe wird weitere drei Stunden bei 10 °C gerührt, dann läßt man die viskose Lösung in 10 - 15 l Wasser einlaufen und filtriert das ausgefallene Polymer ab: Man wäscht mit Wasser, bis das Waschwasser keine saure Reaktion mehr zeigt, und trocknet bei Raumtemperatur. Die Ausbeute beträgt 140 g sulfoniertes Polyäthersulfon (SPES). Das Produkt zeigt eine reduzierte Viskosität von

$$\eta_{red} = 0{,}53 \cdot 10^{-1}\ l/g$$

und einen Sulfonierungsgrad (gemessen durch Titration) von DS = 0,16.

Die reduzierten Viskositäten in diesen Beispielen wurden aus Lösungen von 0,4 g des Polymeren in 100 ml konzentrierter $H_2SO_4$ bei Raumtemperatur bestimmt.

Beispiel 2 (Variante II)

600 ml (ca. 1104 g) konzentrierter Schwefelsäure (ca. 97%ig; enthält ca. 1,7 mol $H_2O$) werden vorgelegt und mit 125 ml 65%igem Oleum (2 mol $SO_3$) verrührt (Erwärmung auf 60 °C). Das Gemisch wird auf etwa 10 °C gekühlt und 200 g (0,86 mol Monomereinheiten) Polyäthersulfon (Victrex 5200P; ICI) werden in fester Form in einer Portion unter kräftigem Rühren zugegeben. Man rührt noch drei Stunden bei 10 °C nach und arbeitet auf wie in Beispiel 1. Man erhält das sulfonierte Material mit einer Ausbeute von 217 g SPES, das entspricht der theoretischen Ausbeute.
Das Produkt zeigt eine reduzierte Viskosität von

$$\eta_{red} = 0{,}42 \cdot 10^{-1}\ l/g$$

und einen Sulfonierungsgrad (gemessen durch Titration) von DS = 0,22.

Das hier verwendete Victrex 5200P ist ein Polyäthersulfon mit der in Anspruch 12 angegebenen Struktur.

Beispiel 3

Dieses Beispiel zeigt die Zunahme des Sulfonierungsgrades über die Reaktionszeit und bei erhöhter Temperatur. Bei längeren Reaktionszeiten steigt der

Substitutionsgrad an. Die Reaktion wurde durchgeführt nach Variante II, wobei das Polymer vor der Zugabe getrocknet wurde. (Beispiel 2). Die Reaktionstemperatur betrug 25 °C. Abhängig von der Reaktionszeit ergaben sich folgende Sulfonierungsgrade (DS) und Viskositätswerte:

| Zeit (h) | DS | $\eta_{red}$ |
|---|---|---|
| 1 | 0,315 | 0,373 |
| 3 | 0,336 | 0,352 |
| 5 | 0,347 | 0,350 |
| 22 | 0,384 | 0,325 |

Der in 97,00%iger $H_2SO_4$ theoretisch maximal erreichbare Sulfonierungsgrad beträgt DS 0.39.

Beispiel 4

Das in Beispiel 1 beschriebene Verfahren wird wiederholt, wobei das Polymer zuvor nicht getrocknet wurde. Das sulfonierte Produkt zeigt eine reduzierte Viskosität von $\eta_{red}$ = 0.58·$10^{-1}$l/g bei einem Sulfonierungsgrad von DS = 0.09.

Beispiel 5

Beispiel 2 wurde wiederholt, wobei das Ausgangsmaterial zuvor im Hochvakuum bei Raumtemperatur getrocknet wurde. Das sulfonierte Produkt hatte einen Sulfonierungsgrad von DS = 0.37 bei einer reduzierten Viskosität von $\eta_{red}$ = 0,42·$10^{-1}$l/g.

Beispiel 6 Sulfonierung von Victrex durch $SO_3$-Entwicklung über $P_2O_5$

In 350 ml 97%iger $H_2SO_4$ wurden 70 g $P_2O_5$-Pulver schnell eingerührt. Nach Auflösen des $P_2O_5$-Pulvers wurde auf -13ºC gekühlt. 100 g getrocknetes Victrex wurden in die Lösung gegeben und bei ca. -7ºC etwa 5 Stunden gerührt. Die Reaktion wurde dann durch vorsichtige Wasserzugabe abgebrochen und das Produkt wie in Beispiel 1 aufgearbeitet. Das verwendete Victrex war das gleiche wie in Beispiel 1 Ausbeute: 115 g sulfoniertes PES

$$DS = 0,35 \qquad \eta_{red} = 0,423 \,.\, 10^{-1}\ l/g$$

Beispiel 7 Sulfonierung von Victrex durch $SO_3$-Entwicklung aus $K_2S_20_7$

In 350 ml 100%iger Schwefelsäure wurden 30 g $K_2S_2O_7$ bei Raumtemperatur gelöst, danach wurden 100 g getrocknetes Victrex zugegeben. Verwendetes Victrex und Aufarbeitung wie Beispiel 1

| Reaktionszeit | DS | $\eta_{red}$ ($10^{-1}$l/g) |
|---|---|---|
| 6 h | 0,190 | 0,361 |
| 24 h | 0,272 | 0,287 |
| 6 d | 0,310 | 0,229 |
| 20 d | 0,398 | 0,266 |

Das beschriebene Beispiel wurde wiederholt, wobei zunächst das Polymer in der 100%igen Schwefelsäure gelöst wurde. Danach wurde $K_2S_2O_7$ zugesetzt. Die Reaktionstemperatur betrug +10°C.

| Reaktionszeit | DS | $\eta_{red}$ ($10^{-1}$l/g) |
|---|---|---|
| 6 h | 0,080 | - |
| 22 h | 0,127 | - |
| 2 d | 0,136 | 0,41 |
| 4 d | 0,150 | 0,38 |
| 7 d | 0,200 | 0,37 |

Beispiel 8 (nicht erfindungsgemäßes Vergleichsbeispiel)

Beispiel 5 wurde wiederholt, wobei die Reaktionstemperatur auf 40 °C eingestellt wurde. Nach drei Stunden Reaktionszeit und Einrühren der Lösung in Wasser erhielt man eine kolloidale Lösung des stark abgebauten Polymers, aus der sich kein verwendbares Produkt mehr abfiltrieren ließ.

Beispiel 9 (nicht erfindungsgemäßes Vergleichsbeispiel)

Beispiel 6 wurde wiederholt, wobei man 24 Stunden bei 40 °C reagieren ließ. Nach Eingießen in Wasser erhielt man ausschließlich wasserlösliches Reaktionsprodukt.

**Patentansprüche**

1. Verfahren zur Sulfonierung von aromatischen Polyäthersulfonen mittels einer Lösung von Schwefeltrioxid in konzentrierter Schwefelsäure und unter Verwendung eines Lösungsmittels für das entsprechende Polyäthersulfon, dadurch gekennzeichnet daß als Lösungsmittel konzentrierte Schwefelsäure verwendet wird, daß der Gehalt an Schwefeltrioxid, bezogen auf die Gesamtmenge der im Reaktionsgemisch vorliegenden reinen Schwefelsäure, während der gesamten Dauer der Sulfonierung auf einem Wert von weniger als 6 Gewichtsprozent gehalten wird und daß während der gesamten Reaktionsdauer die Temperatur der Reaktionsmischung niedriger als +30 °C gehalten wird.

2. Verfahren nach Anspruch 1, dadurch gekennzeichnet, daß während der gesamten Reaktionsdauer die Temperatur der Reaktionsmischung unterhalb von 12 °C gehalten wird.

3. Verfahren nach Anspruch 1 oder 2, dadurch gekennzeichnet, daß der Gehalt an Schwefeltrioxid während der gesamten Dauer der Sulfonierung auf einem Wert von weniger als 3 Gew.% gehalten wird.

4. Verfahren nach einem oder mehreren der Ansprüche 1 bis 3, dadurch gekennzeichnet, daß anschließend an die Sulfonierung das sulfonierte Polymer durch Eingießen in Wasser ausgefällt und anschließend isoliert und getrocknet wird.

5. Verfahren nach einem oder mehreren der Ansprüche 1 bis 4, dadurch gekennzeichnet, daß man konzentrierte Schwefelsäure mit Oleum versetzt, die entstandene Lösung kühlt und anschließend das Polyäthersulfon in fester Form oder gelöst in konzentrierter Schwefelsäure zugibt.

6. Verfahren nach einem oder mehreren der Ansprüche 1 bis 4, dadurch gekennzeichnet, daß man zuerst das Polyäthersulfon in konzentrierter Schwefelsäure löst und anschließend Oleum unter Rühren der Reaktionsmischung langsam zutropft.

7. Verfahren nach Anspruch 5 oder 6, dadurch gekennzeichnet, daß das Oleum 65 Gew.% $SO_3$ enthält.

8. Verfahren nach einem oder mehreren der Ansprüche 1 bis 4, dadurch gekennzeichnet, daß man die Schwefeltrioxid enthaltende konzentrierte Schwefelsäure dadurch erhält, daß man konzentrierter Schwefelsäure eine Verbindung zusetzt, welche in konzentrierter Schwefelsäure zur Entstehung von Schwefeltrioxid führt.

9. Verfahren nach Anspruch 8, dadurch gekennzeichnet, daß die Verbindung Phosphorpentoxid oder eine Verbindung der Formel $M^{n+}(S_2O_7)^{2-}{}_{n/2}$ ist, wobei M ein Metall und n die Wertigkeit dieses Metalls ist.

10. Verfahren nach Anspruch 9, dadurch gekennzeichnet, daß die Verbindung $K_2S_20_7$ ist.

11. Verfahren nach einem oder mehreren der Ansprüche 1 bis 10, dadurch gekennzeichnet, daß die Sulfonsäuregruppen des erhaltenen sulfonierten Polymers in ihre Metallsalze oder Ammoniumsalze überführt werden.

12. Verfahren nach einem oder mehreren der Ansprüche 1 bis 11, dadurch gekennzeichnet, daß ein Polyäthersulfon eingesetzt wird, das aus der folgenden, sich wiederholenden Struktureinheit aufgebaut ist

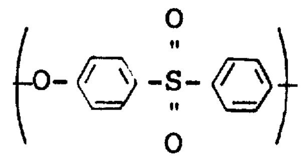

13. Verfahren nach einem oder mehreren der Ansprüche 1 bis 12, dadurch gekennzeichnet, daß die Polymerkonzentration, bezogen auf die Gesamtmenge an reiner, wasserfreier Schwefelsäure, zu Beginn der Reaktion zwischen 5 und 30 Gew.% liegt.

14. Verfahren nach einem oder mehreren der Ansprüche 1 bis 13, dadurch gekennzeichnet, daß das Gewichtsmittel des Molekulargewichts des eingesetzten Polymers zwischen 30.000 und 60.000 Dalton liegt.

**Claims**

1. Process for sulfonating aromatic polyether sulfones by means of a solution of sulfur trioxide in concentrated sulfuric acid and using a solvent for the corresponding polyether sulfone, characterised in that concentrated sulfuric acid is used as the solvent, in that the content of sulfur trioxide, based on the total amount of pure sulfuric acid present in the reaction mixture, is kept at a value of less than 6 wt.% throughout the sulfonation, and in that the temperature of the reaction mixture is kept below +30°C throughout the reaction.

2. Process according to claim 1, characterised in that the temperature of the reaction mixture is kept below 12°C throughout the reaction.

3. Process according to either claim 1 or claim 2, characterised in that the content of sulfur trioxide is kept at a value of less than 3 wt.% throughout the sulfonation.

4. Process according to one or more of claims 1 to 3, characterised in that, following the sulfonation, the sulfonated polymer is precipitated by being poured into water and is then isolated and dried.

5. Process according to one or more of claims 1 to 4, characterised in that oleum is added to concentrated sulfuric acid, the resulting solution is cooled, and the polyether sulfone is then added in solid form or

dissolved in concentrated sulfuric acid.

6. Process according to one or more of claims 1 to 4, characterised in that the polyether sulfone is first dissolved in concentrated sulfuric acid, and oleum is then slowly added dropwise to the reaction mixture, with stirring.

7. Process according to either claim 5 or claim 6, characterised in that the oleum contains 65 wt.% $SO_3$.

8. Process according to one or more of claims 1 to 4, characterised in that the concentrated sulfuric acid containing sulfur trioxide is obtained by adding to concentrated sulfuric acid a compound which, in concentrated sulfuric acid, leads to the formation of sulfur trioxide.

9. Process according to claim 8, characterised in that the compound is phosphorus pentoxide or a compound of the formula $M^{n+}(S_2O_7)^{2-}_{n/2}$, wherein M is a metal and n is the valency of that metal.

10. Process according to claim 9, characterised in that the compound is $K_2S_2O_7$.

11. Process according to one or more of claims 1 to 10, characterised in that the sulfonic acid groups of the resulting sulfonated polymer are converted into their metal salts or ammonium salts.

12. Process according to one or more of claims 1 to 11, characterised in that there is used a polyether sulfone which is composed of the following structural repeating unit

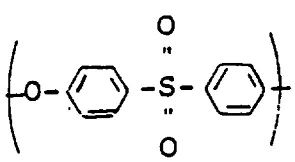

13. Process according to one or more of claims 1 to 12, characterised in that the polymer concentration, based on the total amount of pure, anhydrous sulfuric acid, at the beginning of the reaction is from 5 to 30 wt.%.

14. Process according to one or more of claims 1 to 13, characterised in that the weight-average molecular weight of the polymer used is from 30,000 to 60,000 daltons.

## Revendications

1. Procédé de sulfonation de polyéthersulfones aromatiques au moyen d'une solution de trioxyde de soufre dans de l'acide sulfurique concentré et avec utilisation d'un solvant de la polyéthersulfone utilisée, caractérisé par le fait que l'on utilise, comme solvant, de l'acide sulfurique concentré, que la teneur en trioxyde de soufre, rapportée à la quantité totale d'acide sulfurique pur présent dans le mélange réactionnel, est maintenue pendant toute la durée de la réaction de sulfonation à une valeur inférieure à 6 % en poids, et que la température du mélange réactionnel est maintenue pendant toute la durée de la réaction à une valeur inférieure à 30 °C.

2. Procédé selon la revendication 1, caractérisé par le fait que la température du mélange réactionnel est maintenue pendant toute la durée de la réaction à une valeur inférieure à 12 °C.

3. Procédé selon la revendication 1 ou 2, caractérisé par le fait que la teneur en trioxyde de soufre est maintenue pendant toute la durée de la réaction de sulfonation à une valeur inférieure à 3 % en poids.

4. Procédé selon l'une ou plusieurs des revendications 1 à 3, caractérisé par le fait qu'après sulfonation, le polymère sulfoné est précipité par versement dans de l'eau, puis est isolé et séché.

5. Procédé selon l'une ou plusieurs des revendications 1 à 4, caractérisé par le fait que l'on mélange de l'acide sulfurique concentré avec de l'oléum, que l'on refroidit la solution formée et que l'on y ajoute ensuite la polyéthersulfone sous forme solide ou dissoute dans de l'acide sulfurique concentré.

6. Procédé selon l'une ou plusieurs des revendications 1 à 4, caractérisé par le fait que l'on dissout d'abord la polyéthersulfone dans de l'acide sulfurique concentré et que l'on ajoute ensuite à la solution goutte à goutte, sous agitation du mélange réactionnel, de l'oléum.

7. Procédé selon la revendication 5 ou 6, caractérisé par le fait que l'oléum contient 65 % en poids de $SO_3$.

8. Procédé selon l'une ou plusieurs des revendications 1 à 4, caractérisé par le fait que l'on obtient l'acide sulfurique concentré contenant du trioxyde de soufre en ajoutant à de l'acide sulfurique concentré un composé qui, en présence d'acide sulfurique concentré, aboutit à la formation de trioxyde de soufre.

9. Procédé selon la revendication 8, caractérisé par le

fait que ce composé est du pentoxyde de phosphore ou un composé de formule $M^{n+} (S_2O_7)^{2-}{}_{n/2}$, où M représente un métal et n la valence de ce métal.

**10.** Procédé selon la revendication 9, caractérisé par le fait que ledit composé est $K_2S_2O_7$.

**11.** Procédé selon l'une ou plusieurs des revendications 1 à 10, caractérisé par le fait que l'on convertit les groupes sulfo du polymère sulfoné obtenu en leur sels métalliques ou sels d'ammonium.

**12.** Procédé selon l'une ou plusieurs des revendications 1 à 11, caractérisé par le fait que l'on utilise une polyéthersulfone constituée des motifs de répétition suivants

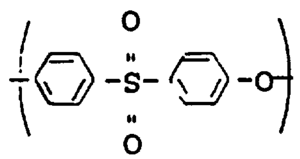

**13.** Procédé selon l'une ou plusieurs des revendications 1 à 12, caractérisé par le fait que la concentration du polymère au début de la réaction, rapportée à la quantité totale d'acide sulfurique anhydre pur, est comprise entre 5 et 30 % en poids.

**14.** Procédé selon l'une ou plusieurs des revendications 1 à 13, caractérisé par le fait que la masse molaire moyenne en poids du polymère utilisé est comprise entre 30 000 et 60 000 daltons.